# FASCICULE DE BREVET EUROPEEN

(11) **EP 0 859 301 B1**
(45) Date de publication et mention de la délivrance du brevet: **18.06.2003**
(21) Numéro de dépôt: 98400262.6
(22) Date de dépôt: 06.02.1998
(51) Int. Cl.: G05D 16/06

(54) **Régulateur détendeur pneumatique**
Pneumatischer Druckreduzierregler
Pneumatic pressure reducing regulator

(30) Priorité: 10.02.1997 FR 9701482
(43) Date de publication de la demande: 19.08.1998
(73) Titulaire: AEROSPATIALE MATRA, 75016 Paris (FR)
(72) Inventeur: Beau, Jean François, 95310 Saint Ouen L'Aumone (FR); Simon, Gilles, 78410 Aubergenville (FR)
(74) Mandataire: Poulin, Gérard

(56) Documents cités:
- FR-A- 2 294 480
- FR-A- 2 567 237
- GB-A- 2 106 613
- GB-A- 2 265 968
- US-A- 2 318 721

## Description

### Domaine technique

L'invention concerne un régulateur détendeur pneumatique, du type dans lequel une capsule de comparaison, sensible aux actions antagonistes d'un ressort de compression et de la pression régnant en aval d'une soupape de régulation, commande les déplacements du clapet de la soupape, par l'intermédiaire d'une tige mobile de commande de détente.

Un tel dispositif peut être utilisé dans tous les domaines techniques nécessitant une régulation pneumatique, notamment lorsqu'il est souhaité une régulation particulièrement précise et stable et lorsque la présence de micro-particules est indésirable. Parmi ces domaines, on citera en particulier, et de façon nullement limitative, les applications spatiales.

### Etat de la technique

Dans un régulateur détendeur pneumatique, un gaz sous pression est ramené à une pression inférieure régulée, au moyen d'une soupape formée d'un clapet sollicité élastiquement contre un siège. Les déplacements du clapet en éloignement du siège, assurant la détente du gaz, sont commandés par une tige mobile, habituellement montée coulissante dans le corps du régulateur. Afin d'assurer les déplacements de la tige, celle-ci est liée à une capsule de comparaison sur laquelle agit un ressort de compression qui tend à déplacer la tige dans le sens de l'ouverture de la soupape. Pour assurer la régulation, la face de la capsule de comparaison opposée à celle sur laquelle agit le ressort de compression, est placée dans une chambre de comparaison située en aval de la soupape et par laquelle passe habituellement le gaz qui s'échappe du régulateur.

Dans les régulateurs détendeurs pneumatiques ainsi constitués, la compression du ressort qui agit sur la capsule de comparaison crée des efforts transverses parasites, qui provoquent à leur tour des frottements entre la tige de commande de la soupape et les paliers qui la supportent. Ces frottements engendrent des imprécisions de régulation aléatoires et forment des micro-particules. De ce fait, les régulateurs de ce type ne sont pas adaptés à certaines applications spécifiques telles que les applications spatiales développées actuellement.

Par ailleurs, du fait que la chambre de comparaison est placée directement en aval de la soupape, les oscillations générées par la détente des gaz sont transmises intégralement à la capsule de comparaison. Sous certaines conditions de débit, cela engendre des instabilités de régulation également peu adaptées à certaines applications spécifiques.

Le document US-A-2 318 721 décrit un régulateur détendeur pneumatique présentant toutes les caractéristiques du préambule de la revendication 1. Dans ce régulateur, la tige mobile qui actionne le clapet de la soupape est guidée et supportée à une extrémité par un disque élastique et perforé et, à son autre extrémité, par coulissement dans une plaque liée au corps du régulateur.

Le document FR-A-2 294 480 décrit un régulateur détendeur pneumatique dont le clapet de la soupape est guidé et centré par deux rondelles élastiques. Le clapet est actionné par une tige guidée et supportée dans le corps du régulateur, par coulissement dans un alésage.

Le document GB-A-2 265 968 décrit un régulateur de pression dont la soupape de régulation comprend un clapet en forme de bille, qui peut être soulevé de son siège par une tige dont l'extrémité opposée est conique et prend appui dans un creux formé dans une coupelle mobile soumise aux actions antagonistes d'un ressort et de la pression régnant dans une chambre qui communique avec l'orifice de sortie.

### Exposé de l'invention

L'invention a précisément pour objet un régulateur détendeur pneumatique dont la conception originale assure une régulation sensiblement plus précise et plus stable que celle des régulateurs existants, tout en évitant la formation de micro-particules sous l'effet des frottements.

Conformément à l'invention, ce résultat est obtenu au moyen d'un régulateur détendeur pneumatique, comprenant :
- un corps ;
- un passage principal formé dans le corps et reliant un orifice d'entrée de gaz à un orifice de sortie de gaz ;
- une soupape comportant un siège formé dans le passage principal et un clapet sollicité élastiquement contre ce siège ;
- une tige mobile de commande de détente montée dans le corps, de façon à pouvoir commander un déplacement du clapet en éloignement du siège ; et
- une capsule de comparaison, mobile avec la tige dans le sens dudit déplacement, sous l'action d'un moyen élastique agissant à l'encontre d'une pression de gaz régnant dans une chambre de comparaison communiquant avec une région aval du passage principal, située entre la soupape et l'orifice de sortie,
caractérisé en ce que la tige mobile est guidée et supportée dans le corps par deux rondelles élastiques et apte à venir en appui contre le clapet pour commander ledit déplacement.

Etant donné qu'au lieu d'être montée coulissante dans le corps du régulateur, la tige servant à commander la soupape est guidée et supportée par deux rondelles élastiques, les frottements entre la tige et le corps du régulateur sont supprimés. Les inconvénients entraînés par ces frottements, c'est-à-dire notamment les imprécisions de régulation aléatoires et la formation de micro-particules, sont donc également supprimés.

Le montage de la tige de commande de la soupape dans le corps du régulateur par l'intermédiaire de deux rondelles élastiques assure un déplacement parfaitement linéaire de la tige par rapport au clapet.

Selon le cas, les deux rondelles élastiques peuvent être situées toutes deux entre la capsule de comparaison et la soupape, ou respectivement de part et d'autre de la capsule de comparaison.

Dans une forme de réalisation préférentielle de l'invention, chacune des rondelles élastiques comprend une région annulaire intérieure fixée sur la tige, une région annulaire extérieure fixée dans le corps et au moins trois bras reliant ces régions annulaires intérieure et extérieure, et séparés les uns des autres par des ouvertures. Cette configuration donne aux rondelles élastiques une grande souplesse axiale et une grande rigidité radiale, ce qui permet d'assurer de façon efficace le guidage radial de la tige, sans entraver son déplacement axial.

Afin d'améliorer encore la souplesse axiale des rondelles élastiques, la région annulaire extérieure de chacune d'entre elle est fixée au corps du régulateur dans des zones éloignées des bras.

Dans un agencement particulièrement avantageux, les bras de chaque rondelle élastique sont tous inclinés circonférentiellement dans le même sens et d'un même angle, par rapport à une direction radiale.

De façon générale, chaque rondelle élastique présente de préférence une raideur radiale au moins environ 200 fois supérieure à sa raideur axiale.

Avantageusement, la chambre de comparaison est reliée par une restriction à la région du passage principal située en aval de la soupape. Les oscillations générées dans cette région par la détente des gaz sont donc amorties et les instabilités de régulation sont considérablement réduites.

Dans ce cas, un soufflet métallique d'étanchéité peut être interposé entre la tige et un manchon interne solidaire du corps. La restriction est alors formée dans une cloison qui sépare la chambre de comparaison de ladite région aval du passage principal.

Dans une variante de réalisation de l'invention, une cloison étanche sépare la chambre de comparaison de la région du passage principal situé en aval de la soupape. La restriction est alors formée entre la tige et une partie saillante d'un manchon interne, solidaire du corps.

Selon le cas, la tige et la capsule de comparaison peuvent être solidaires l'une de l'autre ou formées de pièces distinctes. Dans ce dernier cas, la tige présente une extrémité sensiblement hémisphérique contre laquelle une surface plane de la capsule de comparaison est maintenu en contact, sous l'action conjointe des moyens élastiques et de chacune des rondelles élastiques.

Avantageusement, les frottements peuvent également être supprimés entre le clapet et le siège de la soupape. A cet effet, le clapet est alors supporté et guidé dans le corps du régulateur par au moins une autre rondelle élastique semblable aux rondelles élastiques décrites précédemment.

### Brève description des dessins

On décrira à présent différentes formes de réalisation de l'invention, en se référant aux dessins annexés, dans lesquels :
- la figure 1 est une vue en coupe longitudinale schématique d'un régulateur détendeur pneumatique selon une première forme de réalisation de l'invention ;
- la figure 2 est une vue de face, à plus grande échelle, d'une rondelle élastique utilisée dans le régulateur de la figure 1 ;
- la figure 3 est une vue en coupe comparable à la figure 1, illustrant une deuxième forme de réalisation de l'invention ;
- la figure 4 est une vue en coupe comparable aux figures 1 et 3, illustrant une variante de réalisation de l'invention ; et
- la figure 5 est une vue en coupe comparable aux figures 1, 3 et 4, illustrant une autre variante de réalisation de l'invention.

### Exposé détaillé de plusieurs formes de réalisation

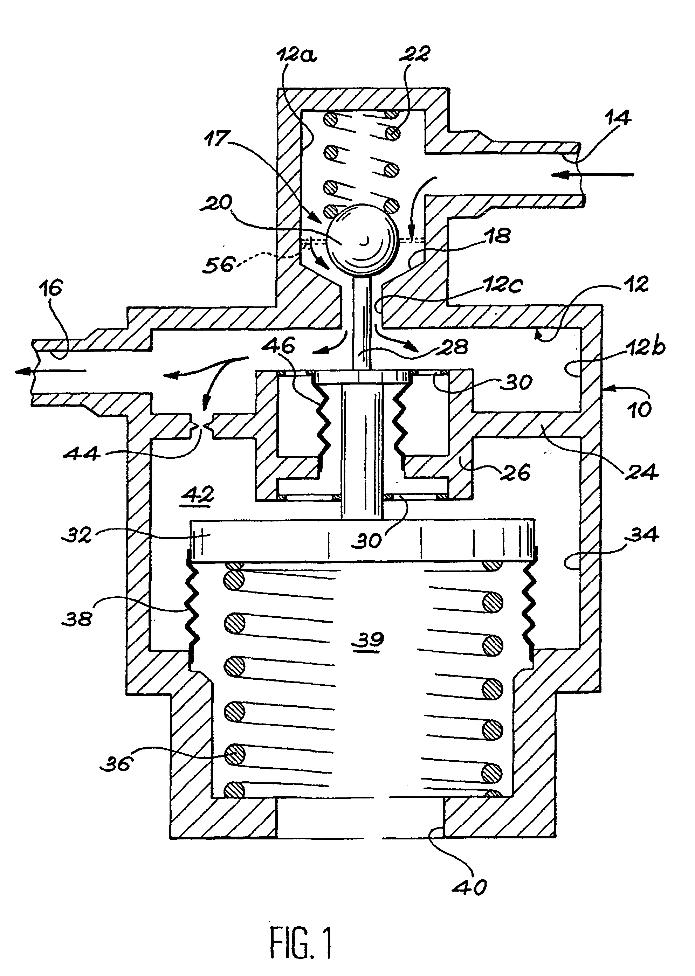

Sur la figure 1, la référence 10 désigne le corps d'un régulateur détendeur pneumatique selon une première forme de réalisation de l'invention. La forme du corps 10 du régulateur peut être quelconque. Le corps 10 du régulateur est réalisé en plusieurs parties, assemblées entre elles selon des techniques connues.

Le corps 10 du régulateur délimite intérieurement un passage principal 12 dont une première extrémité débouche à l'extérieur par un orifice 14 d'entrée de gaz et dont l'extrémité opposée débouche à l'extérieur par un orifice 16 de sortie de gaz. Les parties actives du régulateur, qui seront décrites ultérieurement, ont pour effet de détendre le gaz sous pression admis par l'orifice d'entrée 14 et d'en réguler la pression, afin que le gaz délivré par l'orifice de sortie 16 soit à une pression réduite, dont la valeur reste relativement constante quelle que soit la pression d'entrée.

Dans la forme de réalisation illustrée sur la figure 1, le passage principal 12 comprend une première partie cylindrique 12a, de relativement petit diamètre, dans laquelle débouche radialement l'orifice d'entrée 14, et une deuxième partie cylindrique 12b, de relativement grand diamètre, dans laquelle débouche radialement l'orifice de sortie 16. Ces deux parties 12a et 12b du passage principal 12 communiquent entre elles par une troisième partie cylindrique 12c, de plus petit diamètre. Les trois parties 12a, 12b et 12c du passage principal 12 sont disposées coaxialement.

Une soupape de régulation 17 est placée dans le passage principal 12. Cette soupape 17 comprend un siège de soupape 18, par exemple de forme tronconique, formé entre les parties 12a et 12c du passage principal 12, et un clapet 20, logé dans la première partie cylindrique 12a du passage principal 12. Le clapet 20 est sollicité élastiquement vers le siège de soupape 18 par un ressort hélicoïdal de compression 22 logé dans la partie 12a du passage principal 12. Dans la forme de réalisation illustrée sur la figure 1, le clapet 20 est constitué par une bille. Il peut cependant, prendre une autre forme.

A l'opposé de la partie 12c du passage principal 12, la partie 12b de ce même passage principal est fermée par une cloison 24 qui fait partie intégrante du corps 10 du régulateur. Cette cloison 24 est solidaire d'un manchon 26, disposé coaxialement à l'intérieur de la partie cylindrique 12b du passage principal 12. Le manchon 26 est traversé selon son axe par une tige mobile 28 de commande de détente. De façon plus précise, la tige 28 est supportée et guidée dans le manchon 26 par deux rondelles élastiques 30, de façon à pouvoir se déplacer parallèlement à son axe, tout en étant centré sur cet axe. Dans la forme de réalisation illustrée sur la figure 1, une rondelle élastique 30 est interposée entre la tige 28 et chacune des extrémités du manchon 26.

Comme l'illustre la figure 1, une extrémité de la tige 28 traverse la partie cylindrique 12c du passage principal 12, de façon à pouvoir venir en appui contre le clapet 20 et déplacer celui-ci en éloignement du siège 18. A son extrémité opposée, la tige 28 est solidaire d'une capsule de comparaison 32, en forme de piston. Cette capsule de comparaison 32 est logée dans un évidement cylindrique 34 formé à l'intérieur du corps 10, de l'autre côté de la cloison 24 par rapport à la partie cylindrique 12b du passage principal 12, et coaxialement à cette partie 12b.

Un ressort hélicoïdal de compression 36, centré sur l'axe commun aux différentes parties du passage principal 12 et à la tige 28, est interposé entre le corps 10 du régulateur et la face de la capsule 32 opposée à la tige 28. Ce ressort 36 permet à la tige 28 de commander un déplacement du clapet 20 en éloignement du siège 18.

L'évidement 34, dans lequel est reçue la capsule de comparaison 32, est séparé en deux chambres par un soufflet d'étanchéité 38 dont une première extrémité est fixée de façon étanche sur le bord périphérique de la capsule 32 et dont l'extrémité opposée est fixée de façon étanche au corps 10 du régulateur. Une première 39 de ces chambres, dans laquelle se trouve le ressort 36, est mise à la pression extérieure par une ouverture circulaire 40 pratiquée dans le corps 10 selon l'axe de la tige 28. La deuxième chambre, formée autour du soufflet d'étanchéité 38 et entre la capsule 32 et la paroi 24, constitue une chambre de comparaison 42. Cette chambre de comparaison 42 communique avec la partie 12b du passage principal 12, située en aval de la soupape, au travers d'une restriction 44 constituée par un ajutage formé dans un trou traversant la paroi 24.

Comme on le verra plus en détail ultérieurement, les rondelles élastiques 30 sont des rondelles échancrées, dans lesquelles sont formées des ouvertures. Afin que la restriction 44 constitue la seule communication possible entre la chambre de comparaison 42 et la partie 12b du passage principal 12, un soufflet d'étanchéité métallique 46 est donc prévu entre la tige 28 et le manchon 26. Plus précisément, une première extrémité du soufflet d'étanchéité métallique 46 est fixée à l'intérieur du manchon 26 et son extrémité opposée est fixée sur la tige 18. Le soufflet d'étanchéité métallique 46 se trouve, dans ce cas, entre les deux rondelles élastiques 30.

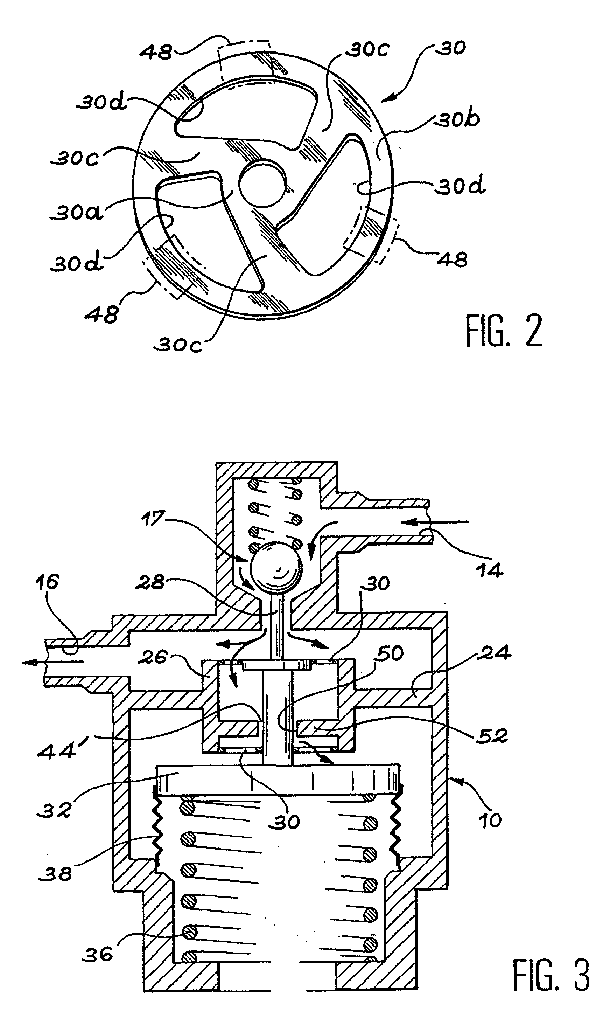

Comme l'illustre plus en détail la figure 2, chacune des rondelles élastiques 30 se présente au repos, lorsqu'elle n'est pas déformée, sous la forme d'une plaque plane, réalisée par exemple en acier à ressort. Chaque rondelle élastique 30 comprend une région annulaire intérieure 30a, prévue pour être fixée sur la tige 28 et une région annulaire extérieure 30b, prévue pour être fixée dans le manchon 26 du corps du régulateur. Les régions annulaires intérieure 30a et extérieure 30b sont reliées entre elles par au moins trois bras 30c, séparés par des ouvertures 30d.

De façon plus précise, la région annulaire intérieure 30a est fixée sur la tige 28 par tout moyen approprié tel que par soudure ou par pincement.

Par ailleurs, la région annulaire extérieure 30b de chacune des rondelles élastiques 30 est fixée dans le manchon 26 en des emplacements limités, correspondant à des zones 48 délimitées par des traits mixtes sur la figure 2. Le nombre des zones de fixation 48 est identique au nombre de bras 30c et d'ouvertures 30d et ces zones sont situées dans les parties de la région annulaire extérieure 30b les plus éloignées des bras 30c. Dans ces zones 48, la fixation de la région annulaire extérieure 30b dans le manchon 26 peut être effectuée par tout moyen approprié tel que par soudure ou par pincement.

En outre, les bras 30c de chacune des rondelles élastiques 30 sont tous inclinés circonférentiellement dans le même sens et d'un même angle, par rapport à une direction radiale de la rondelle.

Grâce à l'ensemble des caractéristiques qui viennent d'être décrites, les rondelles élastiques 30 présentent une grande souplesse axiale, tout en ayant une raideur radiale suffisamment élevée pour assurer un centrage efficace de la tige 28. Plus précisément, chaque rondelle élastique 30 a une raideur radiale au moins environ 200 fois supérieure à sa raideur axiale.

Le régulateur détendeur pneumatique qui vient d'être décrit en se référant aux figures 1 et 2 est réalisé de telle sorte que tout frottement est supprimé entre la tige 28 de commande de détente et le corps 10 du régulateur. Cette caractéristique, obtenue en remplaçant le coulissement classique par au moins une rondelle élastique du type de la rondelle 30 sur la figure 2, permet de supprimer les imprécisions de régulation aléatoires générées habituellement par les frottements, ainsi que les micro-particules formées par ces derniers.

Par ailleurs, la présence de la restriction 44 dans la cloison 24 ainsi que l'ajout du soufflet métallique 46 permettent d'éviter que la pression qui règne dans la chambre de comparaison 42 ne subisse les oscillations à relativement haute fréquence générées par la détente des gaz en aval de la soupape 17. Les instabilités de régulation qui découlent généralement de ces oscillations sont donc également avantageusement réduites.

Dans une deuxième forme de réalisation de l'invention illustrée sur la figure 3, la restriction 44 formée dans la cloison 24 est supprimée, ainsi que le soufflet métallique 46. Dans ce cas, la cloison 24 est donc étanche et la pression régnant en aval de la soupape 17 est admise dans la chambre de comparaison 42 au travers d'une restriction 44' formée directement entre le corps 10 du régulateur et la tige 28 de commande de détente. Plus précisément, la restriction 44' est alors constituée par un jeu annulaire existant entre la tige 28 et un alésage 50 pratiqué dans une cloison radiale 52 qui fait saillie vers la tige 28, à partir du manchon 26, entre les rondelles élastiques 30.

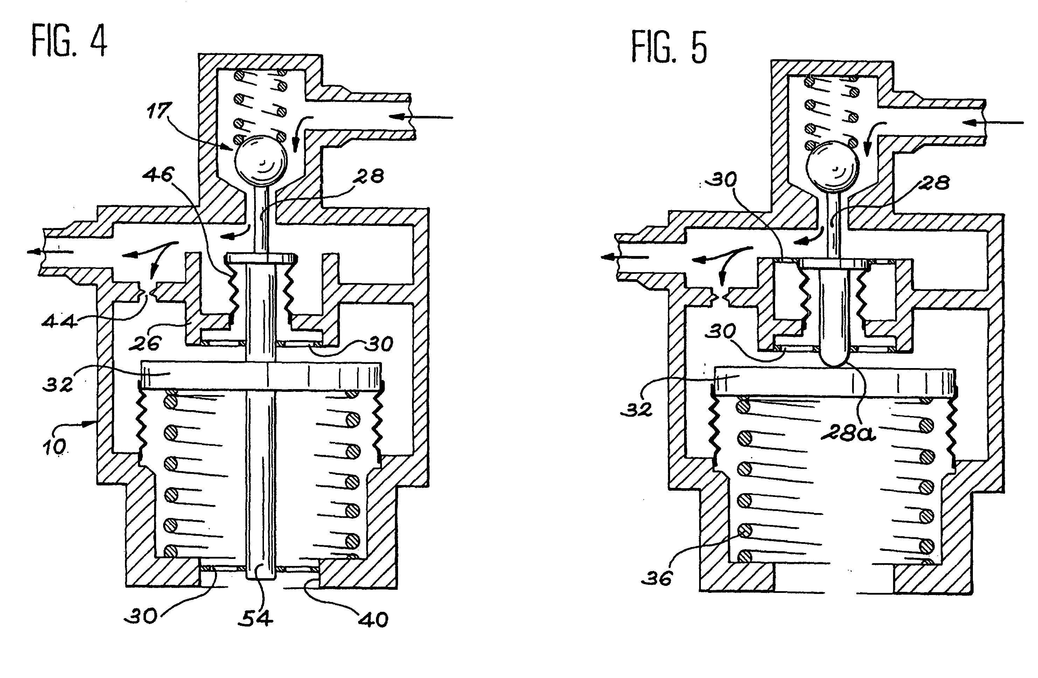

Sur la figure 4, on a représenté une variante de la première forme de réalisation de l'invention décrite précédemment en se référant à la figure 1.

Cette variante se distingue essentiellement par le fait que la rondelle élastique interposée entre la tige 28 et l'extrémité du manchon 26 la plus proche du siège 18, est supprimée et remplacée par une rondelle élastique 30, interposée entre le bord de l'ouverture circulaire 40 pratiquée dans le corps 10 du régulateur, et un prolongement 54 de la tige 28, à l'opposé de la capsule de comparaison 32 par rapport à cette tige.

Par rapport à la forme de réalisation illustrée sur la figure 1, cette variante permet d'améliorer le guidage axial de la tige 28, grâce à l'augmentation de l'écartement entre les deux rondelles élastiques 30.

Comme dans la première forme de réalisation de l'invention, les deux rondelles élastiques 30 sont réalisées de préférence de la manière qui a été décrite en détail en se référant à la figure 2.

Dans une autre variante de réalisation de l'invention illustrée sur la figure 5, au lieu d'être réalisées d'un seul tenant comme dans les formes de réalisation décrites précédemment, la tige 28 et la capsule de comparaison 32 constituent deux pièces distinctes.

De façon plus précise, la capsule de comparaison 32 se présente sous la forme d'un disque plan dont la surface tournée vers la tige 28 est une surface plane. Par ailleurs, l'extrémité 28a de la tige 28 tournée vers la capsule de comparaison 32 présente une forme sensiblement hémisphérique.

Dans ce cas, l'extrémité 28a sensiblement hémisphérique de la tige 28 est maintenue en permanence en appui contre la face plane de la capsule de comparaison 32 sous l'action combinée des ressorts 22 et 36 et des rondelles élastiques 30.

Cette variante de réalisation de la figure 5 a pour avantage d'autoriser un éventuel décalage angulaire ou un défaut d'alignement entre la tige 28 et la capsule de comparaison 32, sans que ce décalage ait de conséquence néfaste sur le fonctionnement du régulateur.

Comme on l'a illustré en traits discontinus sur la figure 1, le maintien et le guidage du clapet 20 à l'intérieur de la première partie 12a du passage principal 12 peuvent être réalisés d'une manière comparable à celle qui a été décrite pour le maintien et le guidage de la tige 28 à l'intérieur du manchon 26. Plus précisément, le clapet 20 est alors monté dans la première partie 12a du passage principal 12 par une ou deux rondelles 56 dont la structure est comparable à celle des rondelles 30 décrites précédemment.

Bien entendu, les différentes variantes qui ont été décrites notamment en se référant aux figures 4 et 5 peuvent être combinées à volonté avec l'une ou l'autre des formes de réalisation décrites en se référant aux figures 1 et 3.

Par ailleurs, on comprendra aisément que la forme de la rondelle élastique 30 décrite en se référant à la figure 2 peut subir certaines modifications.

## Revendications

1. Régulateur détendeur pneumatique, comprenant :
- un corps (10);
- un passage principal (12) formé dans le corps (10) et reliant un orifice (14) d'entrée de gaz à un orifice (16) de sortie de gaz ;
- une soupape (17) comportant un siège (18) formé dans le passage principal (12) et un clapet (20) sollicité élastiquement contre ce siège ;
- une tige mobile (28) de commande de détente montée dans le corps (10), de façon à pouvoir commander un déplacement du clapet (20) en éloignement du siège (18) ; et
- une capsule de comparaison (32), mobile avec la tige (28) dans le sens dudit déplacement, sous l'action d'un moyen élastique (36) agissant à l'encontre d'une pression de gaz régnant dans une chambre de comparaison (42) communiquant avec une région aval du passage principal (12), située entre la soupape (17) et l'orifice de sortie (16),
**caractérisé en ce que** la tige mobile (28) est guidée et supportée dans le corps (10) par deux rondelles élastiques (30) et apte à venir en appui contre le clapet (20) pour commander ledit déplacement.

2. Régulateur détendeur pneumatique selon la revendication 1, dans lequel les deux rondelles élastiques (30) sont placées entre la capsule de comparaison (32) et la soupape (17).

3. Régulateur détendeur pneumatique selon la revendication 1, dans lequel les deux rondelles élastiques (30) sont placées de part et d'autre de la capsule de comparaison (32).

4. Régulateur détendeur pneumatique selon l'une quelconque des revendications précédentes, dans lequel chaque rondelle élastique (30) comprend une région annulaire intérieure (30a) fixée sur la tige (28), une région annulaire extérieure (30b) fixée dans le corps (10) et au moins trois bras (30c) reliant ces régions annulaires intérieure et extérieure, et séparés par des ouvertures (30d).

5. Régulateur détendeur pneumatique selon la revendication 4, dans lequel la région annulaire extérieure de la rondelle élastique (30) est fixée au corps (10) dans des zones (48) éloignées des bras (30c).

6. Régulateur détendeur pneumatique selon l'une quelconque des revendications 4 et 5, dans lequel les bras (30c) sont tous inclinés circonférentiellement dans le même sens et d'un même angle, par rapport à une direction radiale.

7. Régulateur détendeur pneumatique selon l'une quelconque des revendications précédentes, dans lequel chaque rondelle élastique (30) a une raideur radiale au moins environ 200 fois supérieure à sa raideur axiale.

8. Régulateur détendeur pneumatique selon l'une quelconque des revendications précédentes, dans lequel la chambre de comparaison (42) est reliée à la région aval du passage principal (12) au travers d'une restriction (44,44').

9. Régulateur détendeur pneumatique selon la revendication 8, dans lequel un soufflet métallique d'étanchéité (46) est interposé entre la tige (28) et un manchon interne (26) solidaire du corps (10), la restriction (44) étant formée dans une cloison (24) qui sépare la chambre de comparaison (42) de ladite région aval du passage principal (12).

10. Régulateur détendeur pneumatique selon la revendication 8, dans lequel une cloison étanche (24) sépare la chambre de comparaison (42) de ladite région aval du passage principal (12), la restriction (44') étant formée entre la tige (28) et une partie saillante d'un manchon interne (26) solidaire du corps (10).

11. Régulateur détendeur pneumatique selon l'une quelconque des revendications précédentes, dans lequel la tige (28) et la capsule de comparaison (32) sont solidaires l'une de l'autre.

12. Régulateur détendeur pneumatique selon l'une quelconque des revendications 1 à 10, dans lequel la tige (28) présente une extrémité sensiblement hémisphérique (28a) contre laquelle une surface plane de la capsule de comparaison (32) est maintenue en contact, sous l'action conjointe des moyens élastiques (36) et de chaque rondelle élastique (30).

13. Régulateur détendeur pneumatique selon l'une quelconque des revendications précédentes, dans lequel le clapet (20) est supporté et guidé dans le corps (10) par au moins une autre rondelle élastique (56).

## Patentansprüche

1. Pneumatischer Druckregler und -minderer mit:
einem Körper (10)
einem in dem Körper (10) ausgebildeten und eine Gaseintrittsöffnung (14) mit einer Gasaustrittsöffnung (16) verbindenden Hauptdurchgang (12),
einem Ventil (17) mit einem im Hauptdurchgang (12) ausgebildeten Sitz (18) sowie eine elastisch gegen den Sitz vorbelastete Ventilklappe (20),
einer beweglichen Stange (28) zur Steuerung der Druckminderung, die im Körper (10) derart angebracht ist, dass sie eine Verschiebung der Ventilklappe (20) vom Sitz (18) weg steuern kann, und
einer Vergleichskapsel (32), die mit der Stange (28) in der Verschieberichtung unter der Wirkung eines elastischen Mittels (36), das gegen einen in der Vergleichskammer (42), die mit einem zwischen dem Ventil (17) und der Austrittsöffnung (16) gelegenen Bereich stromab des Hauptdurchgangs (12) in Verbindung steht, herrschenden Druck wirkt, bewegbar ist,
**dadurch gekennzeichnet, dass**
die bewegliche Stange (28) durch zwei elastische Scheiben (30) im Körper (10) geführt und gehaltert ist und gegen die Ventilklappe (20) zur Anlage kommen kann, um die Verschiebung zu steuern.

2. Pneumatischer Druckregler und -minderer nach Anspruch 1, wobei die beiden elastischen Scheiben (30) zwischen der Vergleichskapsel (32) und dem Ventil (17) angeordnet sind.

3. Pneumatischer Druckregler und -minderer nach Anspruch 1, wobei die beiden elastischen Scheiben auf beiden Seiten der Vergleichskapsel (32) angeordnet sind.

4. Pneumatischer Druckregler und -minderer nach einem der vorangehenden Ansprüche, wobei jede elastische Scheibe einen an der Stange (28) befestigten Innenringbereich (30a) und einen am Körper (10) befestigten Außenringbereich (30b) sowie mindestens drei Arme (30c), welche den Innenringbereich und den Außenringbereich verbinden und durch Öffnungen (30d) getrennt sind, aufweist.

5. Pneumatischer Druckregler und -minderer nach Anspruch 4, wobei der Außenringbereich der elastischen Scheibe (30) am Körper (10) in von den Armen (30c) entfernten Zonen (48) befestigt ist.

6. Pneumatischer Druckregler und -minderer nach einem der Ansprüche 4 und 5, wobei die Arme (30c) alle umfangsmäßig in der gleichen Richtung und unter einem gleichen Winkel in Bezug auf eine Radialrichtung geneigt bzw. schräggestellt sind.

7. Pneumatischer Druckregler und -minderer nach einem der vorangehenden Ansprüche, wobei jede elastische Scheibe (30) eine radiale Steifigkeit aufweist, die mindestens das 200-fache ihrer axialen Steifigkeit beträgt.

8. Pneumatischer Druckregler und -minderer nach einem der vorangehenden Ansprüche, wobei die Vergleichskammer (42) mit dem Bereich stromab des Hauptdurchgangs (12) über eine Verengung (44,44') verbunden ist.

9. Pneumatischer Druckregler und -minderer nach Anspruch 8, wobei ein metallischer Dichtungsbalg (46) zwischen die Stange (28) und eine mit dem Körper (10) einstückige innere Muffe (26) eingefügt ist, und die Verengung (44) in einer Wand (24) ausgebildet ist, die die Vergleichskammer (42) vom stromabwärtigen Bereich des Hauptdurchgangs (12) trennt.

10. Pneumatischer Druckregler und -minderer nach Anspruch 8, wobei eine dichte Trennwand (24) die Vergleichskammer (42) von dem stromabwärtigen Bereich des Hauptdurchgangs (12) trennt, und die Verengung (44') zwischen der Stange (28) und einem vorspringenden Abschnitt der mit dem Körper (10) einstückigen inneren Muffe (26) ausgebildet ist.

11. Pneumatischer Druckregler und -minderer nach einem der vorangehenden Ansprüche, wobei die Stange (28) und die Vergleichskapsel (32) einstückig bzw. fest miteinander verbunden sind.

12. Pneumatischer Druckregler und -minderer nach einem der Ansprüche 1 bis 10, wobei die Stange (28) ein im wesentlichen halbkugelförmiges Ende (28a) aufweist, mit dem eine plane Oberfläche der Vergleichskapsel (32) unter der gemeinsamen Wirkung der elastischen Mittel (36) und jeder elastischen Scheibe (30) in Kontakt gehalten wird.

13. Pneumatischer Druckregler und -minderer nach einem der vorangehenden Ansprüche, wobei die Ventilklappe (20) im Körper (10) durch mindestens eine weitere elastische Scheibe (56) gehaltert und geführt ist.

## Claims

1. A pneumatic pressure-reducer, **characterized by** the fact that it comprises:
- a body (10);
- a main passage (12) formed in the body (10) and connecting a gas inlet aperture (14) with a gas outlet aperture (16);
- a valve (17) having a seat (18) formed in the main passage (12) and a flap (20) pressed elastically against this seat;
- a movable pressure reduction control rod (28), guided and supported in the body (10) by two spring washers (30), so as to be able to control a movement of the flap (20) away from the seat (18); and
- a comparison capsule (32), movable with the rod (28) in the direction of the said movement, under the action of an elastic means (36) acting against a gas pressure prevailing in a comparison chamber (42) communicating with a downstream region of the main passage (12), situated between the valve (17) and the outlet aperture (16),
**characterized in that** the movable rod (28) is guided and supported in the body (10) by two elastic washers (30) and can bear against the flap (20) in order to control said displacement.

2. A pneumatic pressure-reducer according to claim 1, wherein the two spring washers (30) are placed between the comparison capsule (32) and the valve (17).

3. A pneumatic pressure-reducer according to claim 1, wherein the two spring washers (30) are placed on either side of the comparison capsule (32).

4. A pneumatic pressure-reducer according to any one of the preceding claims, wherein each spring washer (30) comprises an internal annular region (30a) fixed on the rod (28), an external annular region (30b) fixed in the body (10) and at least three arms (30c) connecting these internal and external annular regions, and separated by openings (30d).

5. A pneumatic pressure-reducer according to claim 4, wherein the external annular region of the spring washer (30) is fixed to the body (10) in areas (48) distant from the arms (30c).

6. A pneumatic pressure-reducer according to either one of claims 4 and 5, wherein the arms (30c) are all inclined circumferentially in the same direction and by the same angle, with respect to a radial direction.

7. A pneumatic pressure-reducer according to any one of the preceding claims, wherein each spring washer (30) has a radial stiffness at least around 200 times greater than its axial stiffness.

8. A pneumatic pressure-reducer according to any one of the preceding claims, wherein the comparison chamber (42) is connected to the downstream region of the main passage (12) through a restriction (44, 44').

9. A pneumatic pressure-reducer according to claim 8, wherein a metallic sealing bellows (46) is interposed between the rod (28) and an internal sleeve (26) integral with the body (10), the restriction (44) being formed in a partition (24) which separates the comparison chamber (42) from the said downstream region of the main passage (12).

10. A pneumatic pressure-reducer according to claim 8, wherein a gas-tight partition (24) separates the comparison chamber (42) from the said downstream region of the main passage (12), the restriction (44') being formed between the rod (28) and a projecting part of an internal sleeve (26) integral with the body (10).

11. A pneumatic pressure-reducer according to any one of the preceding claims, wherein the rod (28) and the comparison capsule (32) are integral with one another.

12. A pneumatic pressure-reducer according to any one of claims 1 to 10, wherein the rod (28) has a substantially hemispherical end (28a) against which a flat surface of the comparison capsule (32) is held in contact, under the joint action of the elastic means (36) and each spring washer (30).

13. A pneumatic pressure-reducer according to any one of the preceding claims, wherein the flap (20) is supported and guided in the body (10) by at least one other spring washer (56).
